# EUROPEAN PATENT APPLICATION

(11) **EP 3 835 952 A1**
(43) Date of publication of application: **16.06.2021**
(21) Application number: 18929447.3
(22) Date of filing: 26.12.2018
(51) Int. Cl.: G06F 9/451

(54) **METHOD AND APPARATUS FOR SWITCHING DISPLAY INTERFACE, AND ELECTRONIC DEVICE**

(30) Priority: 10.08.2018 CN 201810912195
(71) Applicant: Beijing Microlive Vision Technology Co., Ltd, Beijing 100080 (CN)
(72) Inventor: JIANG, Kun, Beijing 100190 (CN)
(74) Representative: Rüger Abel Patentanwälte PartGmbB
(86) International application number: PCT/CN2018/124071
(87) International publication number: WO 2020/029527

(57) **Abstract**

The present disclosure discloses a display interface switching method, a display interface switching apparatus and an electronic device. The display interface switching method includes:determining (S101) a second display interface based on a first triggering instruction triggered by a user on a first display interface and multimedia information currently displayed on the first display interface, when the first triggering instruction is received; switching (S102) the first display interface to the second display interface, and content to be displayed on the second display interface corresponds to the multimedia information currently displayed on the first display interface. The first display interface currently displayed is switched to the second display interface where the target displayed content is located by the triggering instruction of the user, thereby realizing quick query display of the required displayed content, improving the query speed of the displayed content, and shortening the query time, which further improves the user experience.

## Description

### CROSS-REFERENCE TO RELATED APPLICATION

This application is based on and claims priority to Chinese Patent Application No. 201810912195.5, filed on August 10, 2018, to the Chinese National Intellectual Property Administration, the disclosure of which is incorporated by reference herein its entity.

### Technical Field

The present disclosure relates to the field of application software technologies, and in particular, to a display interface switching method, a display interface switching apparatus, and an electronic device.

### Background Art

With the rapid development of science and technology and the improvement of people's living conditions, mobile phones have become an indispensable part of life. With the improvement and enrichment of mobile phone functions, mobile phone-based application is also more diverse, especially for applications for viewing multimedia information such as video and pictures. However, for these applications, when playing video data therein, if it is desired to view relevant content such as the author of the played video data and other video data uploaded by the author, it is usually necessary to click on a pull-down menu button on the display interface where the video data is played, and further select corresponding buttons of the relevant content in the pull-down menu, so as to enter corresponding interfaces of the relevant content, where the required relevant content is viewed on the display interface of the relevant content. Although such processing implements the query display of the relevant content, the implementation is relatively complicated, and it is impossible to meet the needs of the user to quickly view relevant content of currently played video data, thus the user experience is not satisfactory.

### Summary of the Disclosure

The present disclosure provides a display interface switching method, a display interface switching apparatus, and an electronic device to implement a switching of a display interface.

In a first aspect, a display interface switching method is provided, which comprising:
determining a second display interface based on a first triggering instruction triggered by a user on a first display interface and multimedia information currently displayed on the first display interface, when the first triggering instruction is received;
switching the first display interface to the second display interface, where content to be displayed on the second display interface corresponds to the multimedia information currently displayed in the first display interface.

In a possible implementation, the determining the second display interface based on the first triggering instruction and the multimedia information currently displayed on the first display interface, comprises:
acquiring multimedia information currently displayed on the first display interface based on the first triggering instruction;
determining, according to identifier information corresponding to the multimedia information, content that matches the identifier information as the content to be displayed content;
determining the display interface to which the content to be displayed belongs as the second display interface corresponding to the multimedia information.

In a possible implementation, the determining according to identifier information corresponding to the multimedia information, content that matches the identifier information as the content to be displayed, comprises:
performing query in a local storage according to the identifier information, acquiring content that matches the identifier information as the content to be displayed;
   or
sending a query request carrying the identifier information to a server;
receiving a query response returned by the server, where the query response carries content that matches the identifier information; and
using the content that matches the identifier information carried in the query response as the displayed content.

In a possible implementation, the content to be displayed on the second display interface comprises content in text form and/or content in multimedia form.

In a possible implementation, the first triggering instruction comprises any one of the following:
a triggering instruction corresponding to a sliding operation on the display interface;
a triggering instruction corresponding to a click operation on the display interface;
a triggering instruction corresponding to a gesture operation; and
a triggering instruction corresponding to a voice control operation.

In a possible implementation, when the first triggering instruction is a triggering instruction corresponding to a click operation of the user on the first display interface, the click operation comprises a click operation on a triggering button.

In a possible implementation, further comprising:
when the second triggering instruction triggered by the user on the second display interface is received, switching based on the second triggering instruction, the second display interface to the first display interface where the multimedia information is to be displayed.

In a possible implementation, the second triggering instruction comprises any one of the following:
a triggering instruction corresponding to a sliding operation on the display interface;
a triggering instruction corresponding to a click operation on the display interface;
a triggering instruction corresponding to a gesture operation; and
a triggering instruction corresponding to a voice control operation.

In a possible implementation, when the second triggering instruction is a triggering instruction corresponding to a click operation of the user on the second display interface, the click operation comprises:
a click operation on the triggering button; or
a click operation on any multimedia information in at least one piece of multimedia information.

In a second aspect, a display interface switching apparatus is provided, which comprising:
a processing unit, configured to determine a second display interface based on a first triggering instruction and multimedia information currently displayed on a first display interface when the first triggering instruction triggered by a user on the first display interface is received;
a switching unit, configured to switch the first display interface to the second display interface, and the content to be displayed on the second display interface corresponds to the multimedia information currently displayed on the first display interface.

In a possible implementation, the processing unit is configured to acquire multimedia information currently displayed on the first display interface based on the first triggering instruction; determine according to the identifier information corresponding to the multimedia information, content that matches the identifier information as the content to be displayed; and determine the display interface to which the content to be displayed belongs as the second display interface corresponding to the multimedia information.

In a possible implementation, the processing unit is configured to perform query in a local storage according to the identifier information, acquire content that matches the identifier information as the content to be displayed. Or, the processing unit is configured to send a query request carrying the identifier information to a server; receive a query response returned by the server, where the query response carries content that matches the identifier information; and use the content that matches the identifier information carried in the query response as the displayed content.

In a possible implementation, the content to be displayed on the second display interface comprises content in text form and/or content in multimedia form.

In a possible implementation, the triggering instruction comprises any one of the following:
a triggering instruction corresponding to a sliding operation on the display interface;
a triggering instruction corresponding to a click operation on the display interface;
a triggering instruction corresponding to a gesture operation; and
a triggering instruction corresponding to a voice control operation.

In a possible implementation, when the first triggering instruction is a triggering instruction corresponding to a click operation of the user on the first display interface, the click operation comprises a click operation on a triggering button.

In a possible implementation, when the second triggering instruction triggered by the user on the second display interface is received, the switching unit switches based on the second triggering instruction, the second display interface to the first display interface where the multimedia information is to be displayed.

In a possible implementation, the second triggering instruction comprises any one of the following:
a triggering instruction corresponding to a sliding operation on the display interface;
a triggering instruction corresponding to a click operation on the display interface;
a triggering instruction corresponding to a gesture operation; and
a triggering instruction corresponding to a voice control operation.

In a possible implementation, when the second triggering instruction is a triggering instruction corresponding to a click operation of the user on the second display interface, the click operation comprises:
a click operation on the triggering button; or
a click operation on any multimedia information in at least one piece of multimedia information.

In a third aspect, an electronic device is provided, which comprising a processor, a memory, and a bus,
where the processor is connected to the memory through the bus;
the memory is configured to store operation instructions; and
the processor is configured to execute the above display interface switching method by calling the operation instructions.

In a fourth aspect, a computer readable storage medium is provided which stores computer instructions that, when executed on a computer, perform the display interface switching method described above.

In the embodiment of the present disclosure, the current first display interface is switched to the second display interface where the target displayed content is located by the triggering instruction of the user, thereby realizing quick query display of the required displayed content, improving the query speed of the displayed content, and shortening the query time, and further improves the user experience.

### The Description of Drawings

FIG. 1 is a schematic flowchart of a display interface switching method according to an embodiment of the present disclosure;
FIG.2 is a schematic flowchart of a specific processing flow of a display interface switching method according to an embodiment of the present disclosure;
FIG.3 is a schematic diagram of switching from a first display interface to a second display interface in a display interface switching method according to an embodiment of the present disclosure;
FIG.4 is a schematic diagram of switching from a second display interface to a first display interface in a display interface switching method according to an embodiment of the present disclosure;
FIG. 5 is a schematic structural diagram of a display interface switching apparatus according to an embodiment of the present disclosure; and
FIG. 6 is a schematic structural diagram of an electronic device based on a display interface switching method according to an embodiment of the present disclosure.

### Detailed Description of the Preferred Embodiment

The present disclosure provides a display interface switching method, a display interface switching apparatus, and an electronic device. The embodiments of the present disclosure are described in detail below with reference to the accompanying drawings.

The embodiments of the present disclosure will be described in detail hereinafter. The examples of these embodiments have been illustrated in the accompanying drawings throughout which same or similar reference numerals refer to same or similar elements or elements having same or similar functions. The embodiments described with reference to the accompanying drawings are illustrative, merely used for explaining the present disclosure and should not be regarded as any limitations thereto.

It should be understood by those skilled in the art that singular forms "a", "an", "the" and "said" may be intended to include plural forms as well, unless otherwise stated. It should be further understood that terms "comprise/comprising" used in this specification specify the presence of the stated features, integers, steps, operations, elements and/or components, but not exclusive of the presence or addition of one or more other features, integers, steps, operations, elements, components, and/or combinations thereof. It should be understood that, when a component is referred to as being "connected to" or "coupled to" another component, it can be directly connected or coupled to other elements or provided with intervening elements therebetween. In addition, "connected to" or "coupled to" as used herein can comprise wireless connection or wireless coupling. As used herein, the term "and/or" comprises all or any of one or more associated listed items or combinations thereof.

It should be understood by those skilled in the art that, unless otherwise defined, all terms (including technical and scientific terms) used herein have the same meaning as commonly understood by those skilled in the art to which the present disclosure belongs. It should be further understood that terms, such as those defined in commonly used dictionaries, should be interpreted as having a meaning that is consistent with their meanings in the context of the prior art and will not be interpreted in an idealized or overly formal sense unless expressly so defined herein.

In order to make the purpose, technical solutions and advantages of this disclosure clearer, the implementation of the present disclosure is further described in detail in combination with the attached drawings.

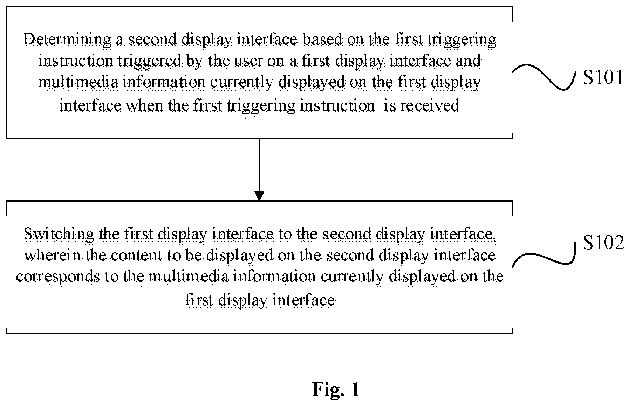

As shown in FIG. 1, the display interface switching method provided by the present disclosure may include the following steps.

Step S101, determining a second display interface based on a first triggering instruction triggered by a user on a first display interface and multimedia information currently displayed on the first display interface when the first triggering instruction is received.

Step S102, switching the first display interface to the second display interface, where the content to be displayed on the second display interface corresponds to the multimedia information currently displayed on the first display interface.

In the embodiment, the current first display interface is switched to the second display interface where the content to be displayedof a target is on by the first triggering instruction of the user, thereby realizing quick query display of the required contentto be displayed, improving the query speed for the contentto be displayed, and shortening the query time, and which further improves the user experience.

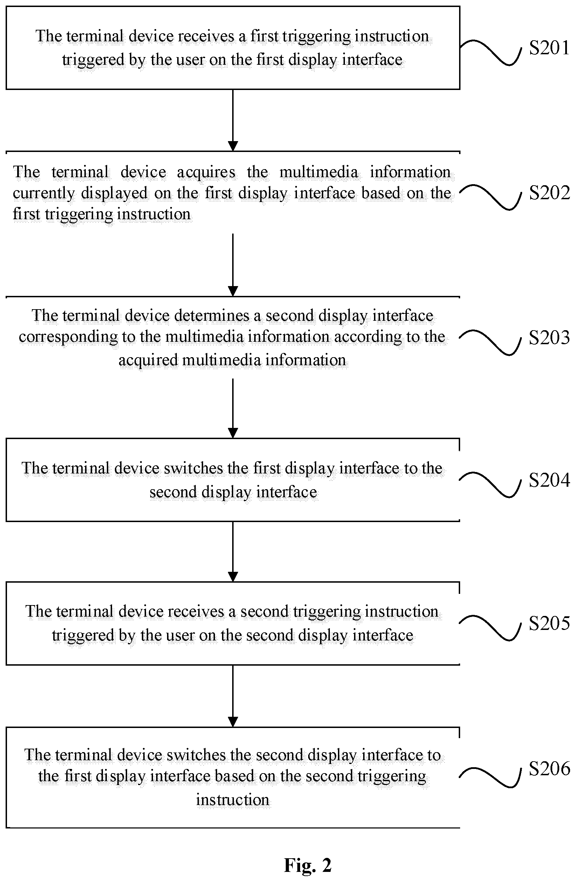

Based on the technical solution provided by above embodiment of the present disclosure, the technical solution is explained in detail in a specific embodiment. In the embodiment, the first display interface and the second display interface are display interfaces on a terminal device. The first display interface is specifically a display interface when the multimedia information is currently played on the terminal device, and the second display interface is specifically a display interface when the content to be displayed, associated with the multimedia information currently displayed on the first display interface, is displayed on the terminal device. As shown in FIG. 2, the display interface switching method provided by an embodiment of the present disclosure may include the following steps.

Step S201: the terminal device receives a first triggering instruction triggered by the user on the first display interface.

Specifically, the first triggering instruction may include:
a. a triggering instruction corresponding to a sliding operation on the first display interface.
   Where, the sliding operation in (a) may be a sliding operation in any direction on the first display interface, such as left sliding, right sliding, up-sliding, and down-sliding. Certainly, the sliding direction is not limited to these as exampled, and may be any other directions.
b. a triggering instruction corresponding to a click operation on the display interface.
   When the triggering instruction is a triggering instruction corresponding to the click operation of the user on the first display interface, the click operation may comprise a click operation on a triggering button.
   The triggering instruction is mainly applied to the situation that the current display interface is a preset display interface, that is, an operation process for being ready to switch from the first display interface to the second display interface.
   Where, for the triggering button design described above, it may be pre-configured at any position on the first display interface.
c. a triggering instruction corresponding to a gesture operation.
   Several fixed gesture actions may be pre-configured as the triggering instructions for the switching of the display interface, such as a left-sliding gesture, a right-sliding gesture, etc., so that a corresponding instruction is triggered when a corresponding gesture action made by the user is received. Certainly, the gesture action may also be configured by the user according to his or her preference.
d. a triggering instruction corresponding to a voice control operation.

The triggering instruction of the voice control operation may be pre-configured; certainly, the user may configure a quick voice control operation instruction according to his or her preference, for example, the instruction"1" indicates switching to the second display interface of the user. In a specific embodiment, when there is multimedia information displayed on current first display interface, and it is received that the user says "1", the current first display interface is switched to the second display interface based on "1".

Step S202: the terminal device acquires the multimedia information currently displayed on the first display interface based on the first triggering instruction.

In this step, after the first triggering instruction triggered by the user is received, the acquiring of the multimedia information displayed on current first display interface is performed based on the first triggering instruction, and the currently displayed multimedia information may be determined by the query processing on the content displayed on current first display interface.

Step S203: the terminal device determines the second display interface corresponding to the acquired multimedia information according to the acquired multimedia information.

In this step, after the currently displayed multimedia information is acquired, the content that matches the multimedia information is determined as the content to be displayed according to the identifier information corresponding to the multimedia information.

Where, the processing of determining the content that matches the identifier information corresponding to the multimedia information as the content to be displayed may include two processing schemes:
a. local processing by the terminal device;
   Specifically, query is performed in local storage based on the identifier information, and the content that matches the identifier information is found in the local storage, and the found content is used as the content to be displayed.
b. processing at the server side;
   Specifically, the terminal device transmits a query request carrying the identifier information to the server, and the server performs a query in database based on the identifier information carried in the query request. After finding the content that matches the identifier information, the server transmits a query response carrying the content to the terminal device, and the terminal device uses the content carried in the query response as the content to be displayed.

Further, the display interface to which the content to be displayed belongs is determined as the second display interface corresponding to the multimedia information. Where the content to be displayed on the second display interface may include content in text form and/or content in multimedia form. The content in text form may include personal information of the author, relevant introductions, and the like; the content in multimedia form may include multimedia information photographed by the author himself and multimedia information uploaded by the author.

Step S204: the terminal device switches the first display interface to the second display interface.

In this step, based on the foregoing determined second display interface, the terminal device switches current first display interface, where the content to be displayed on the second display interface is associated with the multimedia information currently displayed on the first display interface.

The above steps S201-S204 illustrate the processing of switching to the second display interface based on the first triggering instruction received on the first display interface and the multimedia information displayed thereon, and the processing of switching from the second display interface to the first display interface will be further explained based on this.

Step S205: the terminal device receives a second triggering instruction triggered by the user on the second display interface.

Where, the content of the second triggering instruction triggered by the user on the second display interface may be the same as that of the first triggering instruction described in the foregoing step S201.

However, the second triggering instruction may differ from the first triggering instruction in:
when the triggering instruction is a triggering instruction corresponding to the click operation of the user on the second display interface, the click operation comprises:
a click operation on the triggering button on the second display interface; or
a click operation on any of at least one piece of multimedia information displayed on the second display interface.

The triggering instruction may be mainly applied to the situation that the current display interface is the second display interface, that is, the operation processing for being ready to switch from the second display interface to the first display interface.

In the case that the click operation on the display interface is a click operation on any of the at least one piece of multimedia information displayed on the second display interface, in one specific embodiment, three pieces of multimedia information (multimedia informationM1, multimedia information M2, and multimedia information M3)are displayed on current second display interface. The user selects the multimedia information M2 according to his or her preference. Under this situation, in the subsequent processing, the multimedia information M2 will be displayed on the first display interface according to the multimedia information M2 selected by the user.

Where, the triggering button on the second display interface may also be pre-configured at any position on the second display interface.

Step S206: the terminal device switches the second display interface to the first display interface based on the second triggering instruction.

In this step, the first display interface is also determined based on the received second triggering instruction, and the processing procedure for determining may be the same as the content recited in the foregoing steps S202-S203.

Certainly, in this step, there is a processing scheme that is different, that is, if the second triggering instruction is a click operation on any multimedia information of the at least one piece of multimedia information displayed on the second display interface, the switching of the display interface is performed directly based on the multimedia information selected by the user's click operation, without requiring the processing of the above steps S202-S203. In a specific embodiment, the current display interface is the second display interface, and three pieces of the multimedia information (multimedia information M1, multimedia information M2, and multimedia information M3) are displayed on the second display interface, and the triggering instruction corresponding to the user's click operation is to select the multimedia information M2. Based on this triggering instruction, the terminal device directly switches the display interface from current second display interface to the first display interface, and the displayed content on the switched first display interface is the multimedia information M2.

Where, in the processing of switching from the first display interface to the second display interface and the processing of switching from the second display interface to the first display interface, except for above specific processing scheme during processing of switching from the second display interface to the first display interface, the triggering instructions in the above two processing may both employ the same triggering instruction, for example, both employ the sliding operation, and the sliding operations are identical (for example, by sliding left once, the first display interface is switched to the second display interface; by sliding left twice, the second display interface is switched to the first display interface), or may employ different triggering operations.

In the present disclosure, the user's triggering instruction is used to implement the switching back and forth between the first display interface and the second display interface, thereby realizing quick query display of content required to be displayed, improving the query speed, shortening the query display process, and reducing the query display time, which further improves the user experience.

Based on the technical solution provided by the above disclosure, a technical solution is explained in the following specific embodiment. In the specific embodiment, the video information is taken as an example of the played multimedia information. Certainly, it should be noted that the specific embodiments and contents thereof are only for explaining one possible implementation scheme of the present disclosure, and do not represent all implementation of the solutions of the present disclosure.

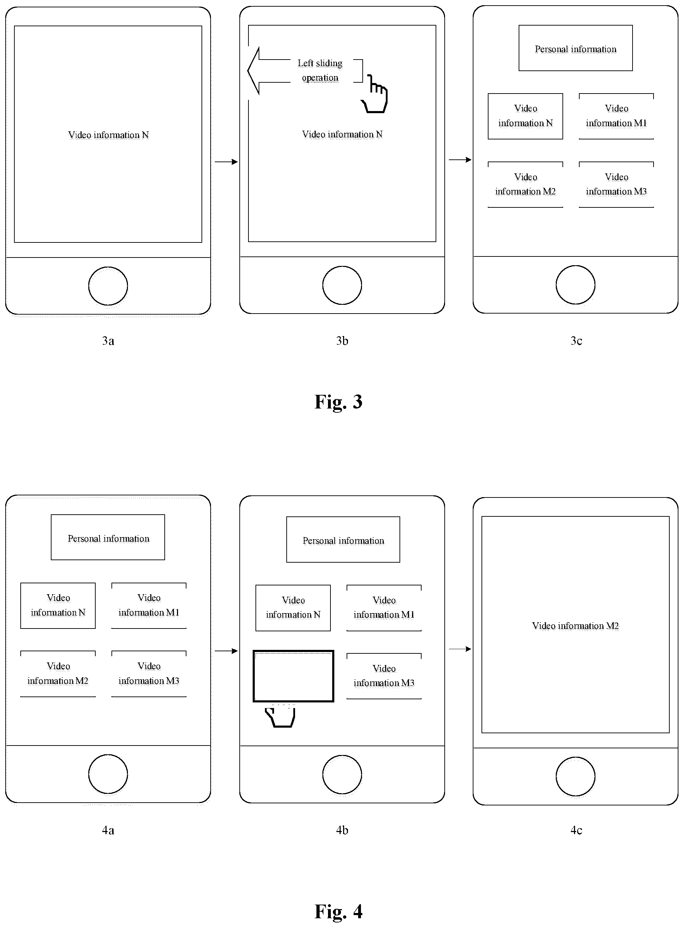

As shown in 3a of FIG. 3, the video information N is currently played on the first display interface of the terminal device, and the first triggering instruction corresponding to the left sliding operation triggered by the user at any position on the first display interface is received.

As shown in 3b of FIG. 3,the currently played video information Nis acquired based on the first triggering instruction corresponding to the left sliding operation, and the personal information corresponding to the video information N, the video information M1, the video information M2, as well as the video information M3is determined through the query processing performed by the server. The display interface to which the determined personal information, the video information M1, the video information M2, and the video information M3 belong is determined as the second display interface of a target, then a display interface switching processing is performed on the current first display interface for displaying the second display interface, and the foregoing determined personal information, the video information N, the video information M1, the video information M2, and the video information M3 is displayed on the second display interface, as shown in3c of FIG. 3.

After switching to the second display interface, as shown in 4a of FIG. 4a, if the second triggering instruction corresponding to the click operation on the displayed video information M2 by the user is received when the second display interface is displayed, as shown in 4b of FIG. 4, on the basis of the second triggering instruction corresponding to the click operation, it is determined that the video information M2 is the content to be displayed of a target, and that the video information M2 needs to be displayed on the first display interface, thus the display interface switching is performed based on this. After the switching, the first display interface is displayed, and the foregoing determined video information M2 is displayed on the first display interface, as shown in4c of FIG. 4.

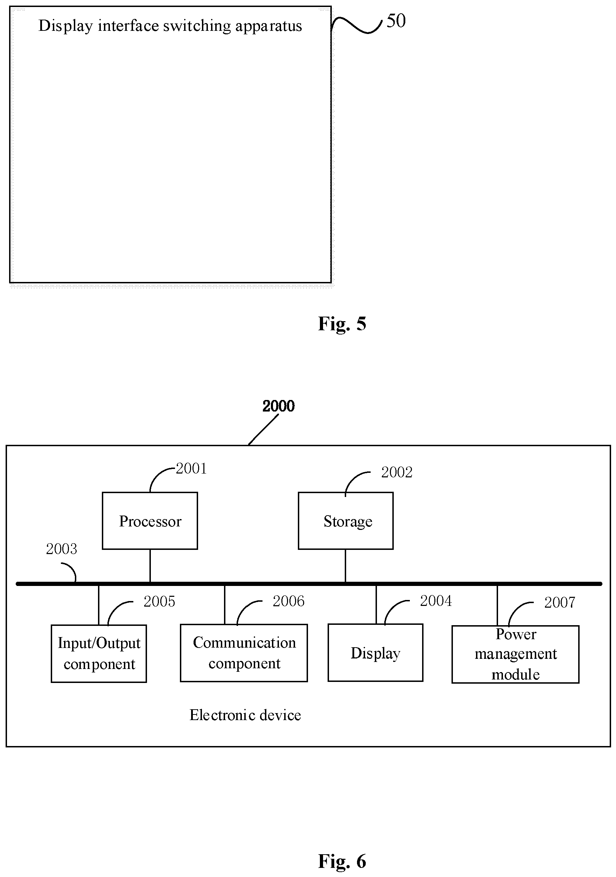

An embodiment of the present disclosure provides a display interface switching apparatus 50. As shown in FIG. 5, the display interface switching apparatus 50 may include a processing unit 51 and a switching unit 52.

The processing unit 51 is configured to determine a second display interface based on the first triggering instruction and the multimedia information currently displayed on the first display interface when the first triggering instruction triggered by the user on the first display interface is received.

The switching unit 52 is configured to switch the first display interface to a second display interface, where the content to be displayed on the second display interface corresponds to the multimedia information currently displayed on the first display interface.

The processing unit 51 may be configured to: acquire multimedia information currently displayed on the first display interface based on the first triggering instruction; determine, according to the identifier information corresponding to the multimedia information, content that matches the identifier information as the content to be displayed; and determine the display interface to which the content to be displayed belongs as the second display interface corresponding to the multimedia information.

The processing unit 51 may be configured to perform query in a local storage according to the identifier information, and acquire content that matches the identifier information as content to be displayed. Or the processing unit 51 may be configured to: send a query request carrying the identifier information to the server; receive a query response returned by the server, where the query response carries content that matches the identifier information; and use content that matches the identifier information carried in the query response as the content to be displayed.

Where, the content to be displayed on the second display interface may include content in text form and/or content in multimedia form.

The first triggering instruction may include any one of the following:
a triggering instruction corresponding to a sliding operation on the display interface;
a triggering instruction corresponding to a click operation on the display interface;
a triggering instruction corresponding to a gesture operation; and
a triggering instruction corresponding to a voice control operation.

In addition, when the first triggering instruction is a triggering instruction corresponding to a click operation of the user on the first display interface, the click operation comprises a click operation on the triggering button.

The switching unit 52 is further configured to switch the second display interface to the first display interface based on the second triggering instruction, when the second triggering instruction triggered by the user on the second display interface is received, where the multimedia information is displayed on the first display interface.

The second triggering instruction may include any one of the following:
a triggering instruction corresponding to a sliding operation on the interface;
a triggering instruction corresponding to a click operation on the interface;
a triggering instruction corresponding to a gesture operation; and
a triggering instruction corresponding to a voice control operation.

When the second triggering instruction is a triggering instruction corresponding to a click operation of the user on the second display interface, the click operation may include:
a click operation on the triggering button; or
a click operation on any of the at least one piece of multimedia information.

In the present disclosure, the user's triggering instruction is used to implement the switching back and forth between the first display interface and the second display interface, thereby realizing quick query display of the content required to be displayed, improving the query speed, shortening the query display process, and reducing the query display time, which further improves the user experience.

An embodiment of the present disclosure also provides an electronic device, as shown in FIG. 6. The electronic device 2000 may include, but is not limited to, a processor 2001, a memory 2002, a communication bus 2003 for connecting various components of the device to enable communication between the various components. The memory 2002 may store computer programs and data, and the processor 2001 may perform the corresponding actions and processing by calling computer programs in the memory 2002 to implement the method in the embodiments of the present disclosure. The structure of the electronic device 2000 shown in the drawings does not constitute a limitation on the embodiments of the present disclosure.

The electronic device 2000 may also comprise a display 2004. The processor 2001 may display a user interface that is needed to be displayed or can be displayed, prompt information, or interaction information of the user of the terminal to the user through the display 2004 during the execution of the action or processing.

The processor 2001may be a CPU, a general-purpose processor, a DSP, an ASIC, an FPGA or other programmable logic device, a transistor logic device, a hardware component, or any combination thereof. It is possible to implement or carry out the various illustrative logical blocks, modules and circuits described in connection with the content disclosed in the present disclosure. The processor 2001 may also be a combination for realizing computing functions, such as one or more microprocessor combinations, a combination of a DSP and a microprocessor, and the like.

The communication bus 2003 may include a path for communicating information among the components described above. The communication bus 2003 may be a PCI bus or an EISA bus and the like. The communication bus 2003 may be divided into an address bus, a data bus, a control bus, and the like. For ease of representation, only one thick line is shown in the figure, but it does not mean that there is only one bus or one type of bus.

The memory 2002 may be a ROM or other type of static storage device that can store static information and instructions, a RAM or other types of dynamic storage devices that can store information and instructions, or may be an EEPROM, a CD-ROM or other optical disk storage, optical disk storage(including compact discs, laser discs, optical discs, digital versatile discs, Blu-ray discs, etc.), magnetic disk storage media or other magnetic storage devices, or can be used to carry or store desired program codes in the form of instructions or data structures and can be any other media accessed by the computer, but is not limited to this.

The electronic device 2000 may also comprise an input/output component 2005 that enables input/output of information and the user interaction with the device.

In practical applications, the input/output component 2005 may be configured according to actual needs, and may include, but is not limited to a keyboard, a mouse, a touch screen, an audio component, a video component, and the like. For example, the electronic device may receive a triggering instruction of the user through the touch screen, and the processor may perform a corresponding action or processing based on the triggering instruction of the user. The audio component/video component may be configured for input and/or output of audio/video signals of the device. Audio components may include, but are not limited to, speakers, microphones, etc., and video components may include, but are not limited to, a camera, a video interface (HDMI, VGA, and/or DVI interface), and the like.

It can be understood that each of the above input/output components 2005 may implement the processing on information individually or in combination. For example, when the user's music play instruction is received through the touch screen, the music is played through the audio component.

The electronic device 2000 may also comprise a communication component 2006 that is configured to enable communication interaction between the electronic device 2000 and other devices (e.g., electronic devices, storage devices). Where, the communication component 2006 may include, but is not limited to, a wired communication component (e.g., a mobile network communication unit such as 3G, 4G, 5G, etc.), a wireless communication component (e.g., Bluetooth, WIFI communication unit), a USB communication component, an audio component, a video component, and the like.

The electronic device 2000 may also comprise a power management module 2007, which may be configured for power supply of the device, conversion of power for the device, and charge/discharge management of the power source, and the module may also be configured with a charging interface.

It should be noted that the electronic device of the embodiment of the present disclosure may be specifically implemented to include, but is not limited to, a smart phone, a smart TV, a personal digital assistant (PDA), a tablet computer, a desktop computer, a portable electronic device (e.g., a portable computer), in-vehicle equipment and the like.

Embodiments of the present disclosure also provides a computer readable storage medium for storing computer instructions that, when executed on a computer, may perform the display interface switching method described above.

Those skilled in the art may understand that each block in the structural diagrams and/or block diagrams and/or flow diagrams and combinations of blocks in the structural diagrams and/or block diagrams and/or flow diagrams may be implemented by computer program instructions. Those skilled in the art may understand that these computer program instructions may be implemented by a general-purpose computer, a professional computer, or a processor of other programmable data processing methods, such that the solution specified in one or more blocks in the structural diagrams and/or block diagrams and/or flow diagrams of the present disclosure are executed by a computer or a processor of other programmable data processing method.

Where, the respective modules of the apparatus in present disclosure may be integrated or deployed separately. The above modules maybe combined into one module, or may be further split into multiple sub-modules.

Those skilled in the art may understand that the drawings are only schematic diagrams of the embodiments, and the modules or flows in the drawings are not necessarily required to implement the present disclosure.

Those skilled in the art may understand that the modules in the apparatus in the embodiments may be distributed in the apparatus of the embodiment according to the description of the embodiments, or the corresponding changes may be located in one or more apparatuses different from the embodiment. The modules of the above embodiments may be combined into one module, or may be further split into multiple sub-modules.

The above-mentioned serial numbers are only for the purpose of description and do not represent the advantages and disadvantages of the embodiments.

The above disclosed are only a few specific embodiments of the present disclosure, but the present disclosure is not limited thereto, and any variations that can be conceived by those skilled in the art based on the principles of the present disclosure should fall within the protection scope of the present disclosure.

## Claims

1. A display interface switching method, comprising:
determining a second display interface based on a first triggering instruction triggered by a user on a first display interface and multimedia information currently displayed on the first display interface, when the first triggering instruction is received;
switching the first display interface to the second display interface, wherein content to be displayed on the second display interface is associated with the multimedia information currently displayed on the first display interface.

2. The display interface switching method according to claim 1, wherein, determining the second display interface based on the first triggering instruction and the multimedia information currently displayed on the first display interface comprises:
Acquiring multimedia information currently displayed on the first display interface based on the first triggering instruction;
determining, according to identifier information corresponding to the multimedia information, content that matches the identifier information as the content to be displayed; and
determining the display interface to which the content to be displayed belongs as the second display interface corresponding to the multimedia information.

3. The display interface switching method according to claim 2, wherein, the determining according to identifier information corresponding to the multimedia information, content that matches the identifier information as the content to be displayed comprises:
performing query in a local storage according to the identifier information, to acquire content that matches the identifier information as the content to be displayed;
or
transmitting a query request carrying the identifier information to a server;
receiving a query response returned by the server, wherein the query response carries content that matches the identifier information; and
using the content that matches the identifier information carried in the query response as the content to be displayed.

4. The display interface switching method according to any one of claims 1 to 3, wherein, the content to be displayed on the second display interface comprises content in text form and/or content in multimedia form.

5. The display interface switching method according to any one of claims 1 to 4, wherein, the first triggering instruction comprises any one of the following:
a triggering instruction corresponding to a sliding operation on the display interface;
a triggering instruction corresponding to a click operation on the display interface;
a triggering instruction corresponding to a gesture operation; and
a triggering instruction corresponding to a voice control operation.

6. The display interface switching method according to claim 5, wherein,
when the first triggering instruction is a triggering instruction corresponding to a click operation of the user on the first display interface, the click operation comprises a click operation on a triggering button.

7. The display interface switching method according to claim 1, further comprising:
switching the second display interface to the first display interface, based on a second triggering instruction triggered by the user on the second display interface when the second triggering instruction is received, wherein the multimedia information is displayed on the first display interface.

8. The display interface switching method according to claim 7, wherein the second triggering instruction comprises any one of the following:
a triggering instruction corresponding to a sliding operation on the display interface;
a triggering instruction corresponding to a click operation on the display interface;
a triggering instruction corresponding to a gesture operation;
a triggering instruction corresponding to a voice control operation.

9. The display interface switching method according to claim 8, wherein, when the second triggering instruction is a triggering instruction corresponding to a click operation of the user on the second display interface, the click operation comprises:
a click operation on the triggering button; or
a click operation on any multimedia information in at least one piece of multimedia information.

10. A display interface switching apparatus, comprising:
a processing unit configured to determine a second display interface based on a first triggering instruction triggered by a user on a first display interface and multimedia information currently displayed on the first display interface when the first triggering instruction is received;
a switching unit configured to switch the first display interface to the second display interface, wherein content to be displayed on the second display interface is associated with the multimedia information currently displayed on the first display interface.

11. The display interface switching apparatus according to claim 10, wherein the processing unit is further configured to:
acquire multimedia information currently displayed on the first display interface based on the first triggering instruction;
determine, according to the identifier information corresponding to the multimedia information, content that matches the identifier information as the content to be displayed; and
determine the display interface to which the content to be displayed belongs as the second display interface corresponding to the multimedia information.

12. The display interface switching apparatus according to claim 11, wherein,
the processing unit is further configured to:
perform query in a local storage according to the identifier information, to acquire content that matches the identifier information as the content to be displayed,
or the processing unit is further configured to:
transmit a query request carrying the identifier information to a server;
receive a query response returned by the server, wherein the query response carries content that matches the identifier information; and
use the content that matches the identifier information carried in the query response as the displayed content.

13. The display interface switching apparatus according to any one of claims 10 to 12, wherein the content to be displayed on the second display interface comprises content in text form and/or content in multimedia form.

14. The display interface switching apparatus according to any one of claims 10 to 13, wherein the first triggering instruction comprises any one of the following:
a triggering instruction corresponding to a sliding operation on the display interface;
a triggering instruction corresponding to a click operation on the display interface;
a triggering instruction corresponding to a gesture operation; and
a triggering instruction corresponding to a voice control operation.

15. The display interface switching apparatus according to claim 14, wherein,
when the first triggering instruction is a triggering instruction corresponding to a click operation of the user on the first display interface, the click operation comprises a click operation on a triggering button.

16. The display interface switching apparatus according to claim 10, wherein, the switching unit is further configured to switch the second display interface to the first display interface, based on the second triggering instruction triggered by the user on the second display interface when the second triggering instruction is received, ,wherein the multimedia information is displayed on the first display interface.

17. The display interface switching apparatus according to claim 16, wherein, the second triggering instruction comprises any one of the following:
a triggering instruction corresponding to a sliding operation on the display interface;
a triggering instruction corresponding to a click operation on the display interface;
a triggering instruction corresponding to a gesture operation;
a triggering instruction corresponding to a voice control operation.

18. The display interface switching apparatus according to claim 17, wherein, when the second triggering instruction is a triggering instruction corresponding to a click operation of the user on the second display interface, the click operation comprises:
a click operation on the triggering button; or
a click operation on any multimedia information in at least one piece of multimedia information.

19. An electronic device, comprising a processor, a memory, and a bus,
wherein, the bus is configured to connect the memory and the memory;
the memory is configured to store operation instructions; and
the processor is configured to execute the display interface switching method according to any one of claims 1 to 9 by calling the operation instructions.

20. A computer readable storage medium storing computer instructions that, when executed on a computer, causes the computer to perform the display interface switching method of any one of claims 1 to 9.
